# EUROPEAN PATENT SPECIFICATION

(11) **EP 3 034 229 B1**
(45) Date of publication and mention of the grant of the patent: **21.02.2018**
(21) Application number: 15199516.4
(22) Date of filing: 11.12.2015
(51) Int. Cl.: B23K 35/30, B23K 35/02

(54) **WELD FILLER FOR SUPERALLOYS**
SCHWEISSZUSÄTZE FÜR SUPERLEGIERUNGEN
PRODUIT D'APPORT POUR SUPERALLIAGES

(30) Priority: 19.12.2014 US 201414577191
(43) Date of publication of application: 22.06.2016
(73) Proprietor: General Electric Company, Schenectady, NY 12345 (US)
(72) Inventor: KOTTILINGAM, Srikanth Chandrudu, Greenville, SC South Carolina 29615 (US); CUI, Yan, Greenville, SC South Carolina 29615 (US); LIN, Dechao, Greenville, SC South Carolina 29615 (US); SCHICK, David Edward, Greenville, SC South Carolina 29615 (US); TOLLISON, Brian Lee, Greenville, SC South Carolina 29615 (US)
(74) Representative: Foster, Christopher Michael

(56) References cited:
- EP-A1- 1 803 521
- EP-A1- 2 759 368
- EP-A1- 2 762 257
- EP-A2- 1 486 286

## Description

### BACKGROUND OF THE INVENTION

The disclosure relates generally to weld filler metals for superalloys.

Superalloys, especially those which are nickel based with a high γ' volume percent, for instance, greater than 30%, typically have a poor weldability. As a result, fusion welding of such superalloys often results in liquation and strain age cracking of the superalloy.

Gas turbine components made of superalloys are typically cast using investment casting process. Defects such as porosity and inclusions are typically found in the castings. The castings can either be scrapped or the defects can be repaired using joining methods. Scrapping of parts result in overall increase in the price of the castings. Hence it is imperative to salvage these castings. Typically such defects are repaired by fusion welding using gas tungsten arc welding (GTAW) process. Lower strength filler metals are typically used to minimize cracking in the weld and base metal heat affected zone (HAZ).

EP 2759368 discloses a friction welding joining process. The joining process includes positioning an article having a base material, and friction welding a pre-sintered preform to the base material. The pre-sintered preform forms a feature on the article. The joined article includes a feature joined to a base material by friction welding of a pre-sintered preform. Suitable materials for the pre-sintered preform include a mixture of a first material having a first melting point and a second material having a second melting point. For example, the first material is considered as a high-melt material and the first melting point is below about 1200 degrees Centigrade, and the second material is considered as a low-melt material and the second melting point is above about 1200 degrees Centigrade. Various options for the composition of the high-melt material and the low-melt material are provided in detail in paragraphs 32 to 40 of EP 2759368.

### BRIEF DESCRIPTION OF THE INVENTION

Embodiments of the invention disclosed herein may include a weld filler metal for a superalloy for welding, the weld filler metal comprising: a preformed article including: a first material with a melting point of approximately 2300 to 2500°F; and a second material with a melting point of approximately 1800 to 2200°F, wherein a ratio of the first material and the second material is variable, wherein a shape of the preformed article (110) comprises a wire shape.

Embodiments of the invention may also include a method of welding a superalloy, the method comprising: applying a preformed article to an area of the superalloy, the preformed article including: a first material with a melting point of approximately 2300 to 2500°F; and a second material with a melting point of approximately 1800 to 2200°F, wherein a ratio of the first material and the second material is variable; and welding the preformed article and the superalloy, wherein the welding includes at least one of gas tungsten arc welding (GTAW), plasma arc welding, laser welding, and electron beam welding.

### BRIEF DESCRIPTION OF THE DRAWING

These and other features of the disclosure will be more readily understood from the following detailed description of the various aspects of the invention taken in conjunction with the accompanying drawings that depict various aspects of the invention.
FIG. 1 shows a schematic diagram of an example of a weld filler metal for a superalloy for welding that may include embodiments of the invention disclosed herein.
FIG. 2 shows a block diagram of welding process that may include embodiments of the invention disclosed herein.

It is noted that the drawings may not be to scale. The drawings are intended to depict only typical aspects of the invention, and therefore should not be considered as limiting the scope of the invention. In the drawings, like numbering represents like elements between the drawings. The detailed description explains embodiments of the invention, together with advantages and features, by way of example with reference to the drawings.

### DETAILED DESCRIPTION OF THE INVENTION

As described herein, superalloys, especially nickel based alloys, have a very poor weldability. Attempts to fusion weld defects of these superalloys often result in cracking and other defects. In some embodiments, the superalloys can comprise alloys such as IN738, Rene80, IN939, GTD111, GTD444, and R108. Articles made from these superalloys have demonstrated porosity and inclusions when cast. Weld filler metals according to embodiments of this disclosure allow for welding of the defects, reducing scrap of cast superalloy articles.

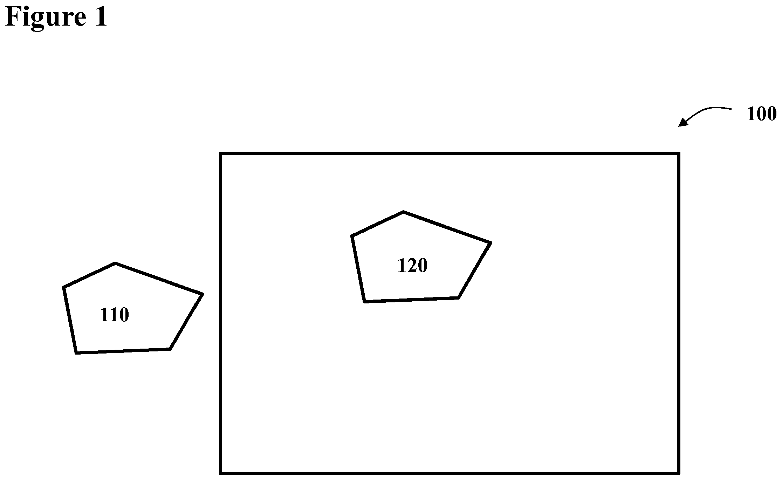

FIG. 1 is a schematic diagram of a superalloy 100 for welding. The superalloy may comprise an article or be of any shape. For instance, articles relevant to the disclosure can include superalloys that have been cast for parts for a turbine in some embodiments. Weld filler metals and the methods described in the disclosure can be applicable to both stationary and rotating parts of a turbine. For instance, in some embodiments, the weld filler metal can be applied to superalloy components 100 comprising nozzles, shrouds, and buckets of a turbine. These parts are known in the art, and it should be understood that superalloy 100 can include any shape or size article and may include these and other parts of a turbine.

A preformed article 110 of the disclosed weld filler material may be used to weld into an area 120 of superalloy 100. Preformed article 110 can include a first material, the first material having a high melting point. The high melting point can include, in some embodiments, a melting point in a range of approximately 2300°F to 2500°F, plus or minus 50°F. The first material can be chosen from a group including, for instance, MM247, IN738, R80, IN939, R142, and R195. In embodiments where the superalloy is cobalt based, the first material may be chosen from H188, H25, and FSX414. These materials are further outlined in Table 1 below. The values are given as weight percent, and the nominal values should be understood to include ranges of weight percentage.

**Table 1**

| Material Name | Composition (wt%) |
|---|---|
| MarM247 | C Max: 0.06-0.09; Cr: 8.0-8.5; Ni: BAL; Mn: 0.10; Si: 0.25; W: 9.3-9.7; Co: 9.0-9.5; Al: 5.4-5.7; + Ta, Ti, Hf |
| IN738 | C: 0.17; Cr: 16.0; Ni: BAL; Co: 8.5; Mo: 1.7; W: 2.6; Nb: 2.0; Ta: 1.7; Ti: 3.4; Al: 3.4; B: 0.001; Zr: 0.1 |
| Rene80 | Ni: BAL; Cr: 14; Co: 9.5; Mo: 4; Al: 3; Ti: 5; W: 4; Zr: 0.03; C: 0.16; B: 0.015 |
| IN939 | C: 0.15; Cr: 22.4; Ni: BAL; Co: 19; W: 1.6; Nb/Cb: 1; Ta: 1.4; Ti: 3.7; Al: 1.9; B: 0.010; Zr: 0.1 |
| Rene142 | C: 0.12; Cr: 6.8; Ni: BAL; Co: 12; Mo: 1.5; W: 4.9; Ta: 6.3; Al: 6.1; Hf: 1.2; Re: 2.8; |
| Rene195 | C: 0.02; Cr: 7.6; Ni: BAL; Co: 3.1; Mo: 0.1; W: 3.9; Ta: 5.5; Al: 7.8; B: 0.015; Hf: 0.15; Re: 1.7 |
| HI188 | C: 0.10; Cr: 22.0; Ni: 22.0; Co: 39/BAL; W: 14.0; B: 0.015 Max; Fe: 3.0; Mn: 1.25 Max; Si: 0.35; La: 0.03 |
| H25 | C: 0.10; Cr: 20; Ni: 10; Co: 51/BAL; W: 15; Fe: 3 Max; Mn: 1.5; Si: 0.4 Max |
| FSX414 | C: 0.25 Max; Cr: 29; Ni: 10; Co: 52.75; W: 7.0; B: 0.01; Fe: 1.0; |

Preformed article 110 can also include a second material, the second material having a low melting point. The low melting point can include, in some embodiments, a melting point in a range of approximately 1800°F to 2200°F, plus or minus 50°F. The second material can be chosen from a group including, for instance, DF4B, BRB, DF6A, D15, AMS4777, and BNi-9. In embodiments where the superalloy is cobalt based, the second material may be chosen from BCo-1 and MarM509B. These materials are further outlined in Table 1 below. The values are given as weight percent, and the nominal values should be understood to include ranges of weight percentage.

**Table 2**

| Material Name | Composition (wt%) |
|---|---|
| DF4B | Cr: 14; Ni: Bal; Co:10; Ta:2.5; Al:3.5; B: 2.7; Y:0.1; |
| BRB | Ni: Bal; Cr:14; Co:9; Al:4; B:2.5; |
| DF6A | Ni: Bal; Cr: 20; Ta: 3; B: 3.15; Y:0.04 |
| D15 | Cr: 15.3; Ni: BAL; Co: 10.3; Ta: 3.5; Al: 3.0; B: 2.5 |
| AMS4777 | Cr: 7; Ni: 83; B: 3; Fe: 3; Si: 4 |
| BNi-9 | C: 0.06 Max; Cr: 15.2; Ni: BAL; B: 4.0 |
| BCo-1 | C: 0.35-0.45; Cr: 18.0-20.0; Ni: 16.0-18.0; Co: BAL; W: 3.5-4.5; Ti: 0.05; Al: 0.05; B: 0.7-0.9; Zr: 0.05; Fe: 1.0; Si: 7.5-8.5; P: 0.02; S: 0.02 |
| MarM509B | C: 0.6; Cr: 23.5; Ni: 10.0; Co: BAL; W: 7.0; Ta: 3.5; Ti: 0.2; B: 2.5; Zr: 0.5; Si: 0.2 |

Properties of the preformed article can be controlled in multiple ways. For instance, by choosing a material chemistry of the first material and a material chemistry of the second material, the exact material chemistry and melting point of preformed article 110 can be controlled. By combining the first material and the second material, a ratio of the two materials can remain variable. For instance, the ratio of the two materials can be determined based on a material content of superalloy 100 to which preformed article 110 will be applied and welded, a melting point of superalloy 100, or both. That is, the material property of the filler weld metal of preformed article 110 can be optimized for superalloy 100 by choosing a ratio of the first material and the second material in order to alter the melting point. A combination of high melting point and low melting point materials allows for a broad range of properties of preformed article 110.

In some embodiments, preformed article 110 may include a cobalt based system, a nickel based system, or some combination thereof. That is, the material chemistry of weld filler metal of preformed article 110 may include substantially nickel, substantially cobalt, or a combination of both. For instance, in some embodiments, preformed article 110 may include H188, H25, FSX414, or MarM509B. The preformed article 110 consists of a wire shaped article.

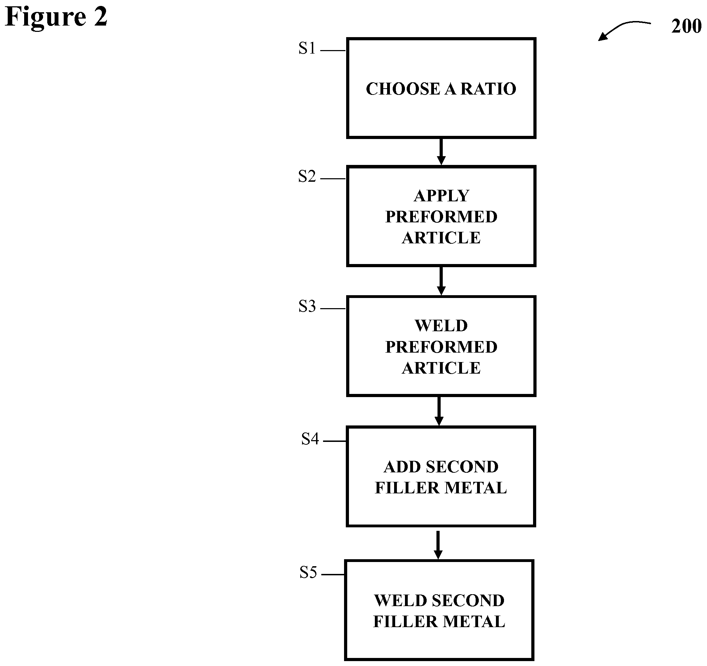

FIG. 2 shows a method of welding superalloy 100 according to embodiments of the present disclosure. At S1, a ratio of the first material and the second material of preformed article 110 is chosen based on the properties of superalloy 100. At S2, preformed article 110 may be applied to superalloy 100. In previous attempts, welding without materials according to embodiments of the present disclosure did not weld properly and often damaged the superalloy by applying high amounts of heat to the traditional welding material, cracking the superalloy at the heat affected zone (HAZ). Further attempts utilized metal fillers in a shape to fit the area needing welding. However, these previous attempts utilized brazing techniques, requiring the whole of the article to be inserted into an oven. Not only does this not work on larger articles, but it also applies heat, sometimes for long periods of time, to the entire article. This could result in partial melting of the whole article and other damage.

In contrast, embodiments of the present disclosure utilize welding techniques. That is, preformed article 110 (FIG. 1) can fit the shape of area 120 and be applied (S2) to superalloy 100. At S3 (FIG. 2), preformed article 110 can be welded to superalloy 100. Due to the ratio chosen at S1 (FIG. 2), the amount of heat required to melt preformed article 110 can be low enough so as not to damage the HAZ of superalloy 100, namely area 120. In some embodiments, the welding can include gas tungsten arc welding (GTAW), plasma arc welding, laser welding, and electron beam welding. Laser welding can include welding techniques wherein a laser rasters across the surface of area 120 with preformed article 110. Gas, such as argon gas, may be used to clean surface of superalloy 100 prior to applying preformed article 110, wherein positive ions can clean a surface, resulting in a better weld. Embodiments of the present disclosure may also utilize DC negative welding techniques, wherein the AC can provide surface cleaning whilst applying the weld with DC. In some embodiments, such as GTAW, pulsing of the current may be utilized, as well as beam techniques.

As such, embodiments of the disclosure include welding preformed article 110 to superalloy 100 (FIG. 1) in S3 (FIG. 2). Methods according to embodiments can utilize these welding techniques in order to build up material from defects in machining. For instance, when an article is cast, mismachining and other processes can result in area 120 not having enough material. Preformed article 110 can be added in order to fill area 120. In some embodiments, the methods may apply to reworking material from defects in machining, where superalloy 100 can be altered using preformed article 110 and reshaping a defect area 120. Embodiments may also include the closure of holes or openings, typically defects in superalloy 100. Further embodiments can include the addition of new components. For instance, superalloy 100 may be made, but additional features may be desired. In these embodiments, further features can be added to superalloy 100 by welding preformed article 110 in a shape, or further shaped after welding, to add or alter features such as squealer tips, angel wings, tip rails, nozzles, or shrouds to articles for a turbine.

By using methods of embodiments of the disclosure, unlike previous welding techniques, the weld will not crack, and unlike brazing, superalloy 100 avoids high heating of the whole part. Further, preformed article 110 application according to embodiments of the present disclosure results in a denser deposit of material than brazing according to previous attempts.

According to some embodiments, a further advantage of methods of the disclosure are that once preformed article 110 has been applied to and welded to superalloy 100, additional materials can be welded to the combination. Due to the chemistry of preformed article 110, a second material, which can comprise traditional filler metals, can be added to a second layer to be welded in S4 (FIG. 2), and at S5 the second filler material can be welded. The second filler metal can be utilized in any of the embodiments described above in reference to preformed article 110, but applied over preformed article 110.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A weld filler metal for a superalloy for welding, the weld filler metal comprising:
   a preformed article including:
      a first material with a melting point of approximately 2300 to 2500°F; and
      a second material with a melting point of approximately 1800 to 2200°F,
   wherein a ratio of the first material and the second material is variable.
2. The weld filler metal of clause 1, wherein at least one of the first and second materials includes at least one of a cobalt based system and a nickel based system.
3. The weld filler metal of any preceding clause, wherein the ratio of the first material and the second material is chosen based on at least one of: a material content of the superalloy and a melting point of the superalloy being welded.
4. The weld filler metal of any preceding clause, wherein the first material includes a material chosen from a group comprising: a list of materials in Table 1.
5. The weld filler metal of any preceding clause, wherein the second material includes a material chosen from a group comprising: a list of materials in Table 2.
6. The weld filler metal of any preceding clause, wherein a shape of the preformed article comprises a wire shape.
7. The weld filler metal of any preceding clause, wherein a shape of the preformed article comprises a shape matching an area of the superalloy to be welded.
8. A method of welding a superalloy, the method comprising:
   applying a preformed article to an area of the superalloy, the preformed article including: a first material with a melting point of approximately 2300 to 2500°F; and a second material with a melting point of approximately 1800 to 2200°F, wherein a ratio of the first material and the second material is variable; and
   welding the preformed article and the superalloy.
9. The method of any preceding clause, wherein at least one of the first and second materials includes at least one of a cobalt based system and a nickel based system.
10. The method of any preceding clause, further comprising:
   choosing the ratio based on at least one of: a material content of the superalloy and a melting point of the superalloy being welded.
11. The method of any preceding clause, wherein the first material includes a material chosen from a group comprising: a list of materials in Table 1.
12. The weld filler metal of any preceding clause, wherein the second material includes a material chosen from a group comprising: a list of materials in Table 2.
13. The method of any preceding clause, wherein a shape of the preformed article comprises a wire shape.
14. The method of any preceding clause, wherein a shape of the preformed article comprises a shape matching the area of the superalloy to be welded.
15. The method of cl any preceding clause, wherein the welding comprises at least one of a group including: building up material from defects in machining, reworking material from defects in machining, closure of holes or openings, and the addition of new components.
16. The method of any preceding clause, wherein the welding includes at least one of a group including: gas tungsten arc welding, plasma arc welding, laser welding, and electron beam welding.
17. The method of any preceding clause, further comprising:
   adding a second filler metal to a second layer of the weld; and
   welding the second filler metal.
18. The method of any preceding clause, wherein the second filler metal comprises a traditional filler metal.

## Claims

1. A weld filler metal for a superalloy (100) for gas tungsten arc welding, plasma arc welding, laser welding and electron beam welding, the weld filler metal
comprising:
a preformed article (110) including:
a first material with a melting point of approximately 2300 to 2500°F; and
a second material with a melting point of approximately 1800 to 2200°F,
wherein a ratio of the first material and the second material is variable, wherein the preformed article (110) is a wire - shaped article.

2. The weld filler metal of claim 1, wherein at least one of the first and second materials includes at least one of a cobalt based system and a nickel based system.

3. The weld filler metal of claim 1 or 2, wherein the ratio of the first material and the second material is chosen based on at least one of: a material content of the superalloy (100) and a melting point of the superalloy (100) being welded.

4. The weld filler metal of claim 3, wherein the first material includes a material chosen from a group comprising: a list of materials in Table 1.

5. The weld filler metal of claim 3 or 4, wherein the second material includes a material chosen from a group comprising: a list of materials in Table 2.

6. The weld filler metal of any preceding claim, wherein a shape of the preformed article (110) comprises a shape matching an area of the superalloy (100) to be welded.

7. A method (200) of welding a superalloy (100) the method (200) comprising:
applying a preformed wire-shaped article (110) to an area of the superalloy (100), the preformed article (110) including: a first material with a melting point of approximately 2300 to 2500°F; and a second material with a melting point of approximately 1800 to 2200°F, wherein a ratio of the first material and the second material is variable; and
welding the preformed article (110) and the superalloy (100), wherein the welding includes at least one of gas tungsten arc welding (GTAW), plasma arc welding, laser welding, and electron beam welding.

8. The method (200) of claim 8, wherein at least one of the first and second materials includes at least one of a cobalt based system and a nickel based system.

9. The method (200) of claim 8 or 9, further comprising:
choosing the ratio based on at least one of: a material content of the superalloy (100) and a melting point of the superalloy (100) being welded.

## Patentansprüche

1. Ein Schweißzusatzmetall für eine Superlegierung (100) für ein Wolfram-Inertgas-Schweißen, ein Plasmaschweißen, ein Laserschweißen und ein Elektronenstrahlschweißen, wobei das Schweißzusatzmetall umfasst:
einen vorgeformten Gegenstand (110), der enthält:
ein erstes Material mit einem Schmelzpunkt von ungefähr 2300 bis ungefähr 2500 °F; und
ein zweites Material mit einem Schmelzpunkt von ungefähr 1800 bis ungefähr 2200 °F; wobei ein Verhältnis des ersten Materials und des zweiten Materials variabel ist, wobei der vorgeformte Gegenstand (110) ein drahtförmiger Gegenstand ist.

2. Das Schweißzusatzmetall nach Anspruch 1, wobei mindestens eines des ersten und des zweiten Materials mindestens eines eines kobaltgestützten Systems und eines nickelgestützten Systems enthält.

3. Das Schweißzusatzmetall nach Anspruch 1 oder 2, wobei das Verhältnis des ersten Materials und des zweiten Materials ausgewählt wird aufgrund mindestens einem aus: einem Materialgehalt der Superlegierung (100) und einem Schmelzpunkt der zu schweißenden Superlegierung (100).

4. Das Schweißzusatzmetall nach Anspruch 3, wobei das erste Material ein Material enthält, das gewählt wird aus einer Gruppe, welche die in Tabelle 1 aufgelisteten Materialien umfasst.

5. Das Schweißzusatzmetall nach Anspruch 3 oder 4, wobei das zweite Material ein Material enthält, das gewählt wird aus einer Gruppe, welche die in Tabelle 2 aufgelisteten Materialien umfasst.

6. Das Schweißzusatzmetall nach einem der vorhergehenden Ansprüche, wobei eine Form des vorgeformten Gegenstands (110) eine Form umfasst, die mit einem Bereich der zu schweißenden Superlegierung (100) übereinstimmt.

7. Ein Verfahren (200) zum Schweißen einer Superlegierung (100), wobei das Verfahren (200) umfasst:
Anwenden eines vorgeformten drahtförmigen Gegenstands (110) auf einen Bereich der Superlegierung (100), wobei der vorgeformte Gegenstand (110) enthält: ein erstes Material mit einem Schmelzpunkt von ungefähr 2300 bis ungefähr 2500 °F; und ein zweites Material mit einem Schmelzpunkt von ungefähr 1800 bis ungefähr 2200 °F; wobei ein Verhältnis des ersten Materials und des zweiten Materials variabel ist, und
Schweißen des vorgeformten Gegenstands (110) und der Superlegierung (100), wobei das Schweißen mindestens eines aus einem Wolfram-Inertgas-Schweißen (Gas Tungsten Arc Welding, GTAW), einem Plasmaschweißen, einem Laserschweißen und einem Elektronenstrahlschweißen umfasst.

8. Das Verfahren (200) nach Anspruch 8, wobei mindestens eines des ersten und des zweiten Materials mindestens eines eines kobaltgestützten Systems und eines nickelgestützten Systems enthält.

9. Das Verfahren (200) nach Anspruch 8 oder 9, das außerdem umfasst:
Wählen des Verhältnisses aufgrund mindestens einem aus einem Materialgehalt der Superlegierung (100) und einem Schmelzpunkt der zu schweißenden Superlegierung (100) .

## Revendications

1. Métal d'apport de soudage pour un superalliage (100) pour le soudage à l'arc sous gaz avec électrode de tungstène, le soudage à l'arc plasma, le soudage au laser et le soudage par faisceau d'électrons, le métal d'apport de soudage comprenant :
un article préformé (110) comportant :
un premier matériau avec un point de fusion d'environ 2300 à 2500 °F ; et
un deuxième matériau avec un point de fusion d'environ 1800 à 2200 °F, un rapport du premier matériau et du deuxième matériau étant variable, l'article préformé (110) étant un article en forme de fil.

2. Métal d'apport de soudage de la revendication 1, au moins un des premier et deuxième matériaux comportant un système à base de cobalt et/ou un système à base de nickel.

3. Métal d'apport de soudage de la revendication 1 ou 2, le rapport du premier matériau et du deuxième matériau étant choisi sur la base d'au moins un des paramètres suivants : une teneur en matériau du superalliage (100) et un point de fusion du superalliage (100) qui est soudé.

4. Métal d'apport de soudage de la revendication 3, le premier matériau comportant un matériau choisi dans un groupe comprenant : une liste de matériaux dans le tableau 1.

5. Métal d'apport de soudage de la revendication 3 ou 4, le deuxième matériau comportant un matériau choisi dans un groupe comprenant : une liste de matériaux dans le tableau 2.

6. Métal d'apport de soudage d'une quelconque revendication précédente, une forme de l'article préformé (110) comprenant une forme correspondant à une zone du superalliage (100) devant être soudée.

7. Procédé (200) de soudage d'un superalliage (100), le procédé (200) comprenant :
l'application d'un article préformé en forme de fil (110) à une zone du superalliage (100), l'article préformé (110) comportant : un premier matériau avec un point de fusion d'environ 2300 à 2500 °F ; et un deuxième matériau avec un point de fusion d'environ 1800 à 2200 °F, un rapport du premier matériau et du deuxième matériau étant variable ; et
le soudage de l'article préformé (110) et du superalliage (100), le soudage comportant au moins une technique parmi le soudage à l'arc sous gaz avec électrode de tungstène (GTAW), le soudage à l'arc plasma, le soudage au laser, et le soudage par faisceau d'électrons.

8. Procédé (200) de la revendication 8, dans lequel au moins un des premier et deuxième matériaux comporte un système à base de cobalt et/ou un système à base de nickel.

9. Procédé (200) de la revendication 8 ou 9, comprenant en outre :
le choix du rapport sur la base d'au moins un des paramètres suivants : une teneur en matériau du superalliage (100) et un point de fusion du superalliage (100) qui est soudé.
